# EUROPÄISCHE PATENTANMELDUNG

(11) **EP 3 364 292 A1**
(43) Veröffentlichungstag der Anmeldung: **22.08.2018**
(21) Anmeldenummer: 17156831.4
(22) Anmeldetag: 20.02.2017
(51) Int. Cl.: G06F 9/44

(54) **VERFAHREN ZUR GENERIERUNG EINER ZUR LAUFZEIT DYNAMISCHEN BENUTZERSCHNITTSTELLE**

(71) Anmelder: Gebauer GmbH, 42653 Solingen (DE)
(72) Erfinder: GEBAUER, Boris, 42719 Solingen (DE)
(74) Vertreter: Raffay & Fleck

(57) **Zusammenfassung**

Die Erfindung betrifft ein Verfahren zur Generierung einer zur Laufzeit dynamischen Benutzerschnittstelle.

Aufgabe der vorliegenden Erfindung ist es, eine Applikation auch zur Laufzeit über das bekannte Maß hinaus anpassen zu können, beispielsweise die Anordnung von Elementen des Fensters, wie Labels, zu verändern, solche hinzuzufügen und/oder zu entfernen, ohne dass ein Neukompilieren notwendig wird. Insbesondere soll auch die grafische Benutzerschnittstelle zur Laufzeit anpassbar und/oder erweiterbar sein.

Gelöst wird die Aufgabe durch Verfahren zur Generierung und/oder Ausführung einer Computersoftware aufweisend mindestens eine grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

## Beschreibung

Die Erfindung betrifft ein Verfahren zur Generierung einer zur Laufzeit dynamischen Benutzerschnittstelle.

Aus dem Stand der Technik ist beispielsweise aus der US 5,832,481 ein Repository bekannt, das über die klassischen Definitionen von Spalten und Tabellen hinaus, Informationen zu Spalten und Tabellen enthält, die beispielsweise zur Erzeugung von Dialogen, Masken und Schnittstellen verwendet werden können. Die dort gespeicherten Informationen sind beispielsweise Anzeigeformate, Label etc.

Es ist, beispielsweise aus dem Powersoft Datawindow Extended Attribute Synchronizer (DWEAS) bekannt, dass Werte im Repository zur Laufzeit geändert und von den erzeugten Objekten übernommen werden können.

Darüber hinaus ist es bekannt für die objektorientierte Programmierung Klassenbeschreibungen oder Objektmodell vorzuhalten (beispielsweise in XML), aus denen Objekte generiert werden können.

Aus der DE 10 2004 008 258 A1 ist es auch bekannt, neue Objekte zur Laufzeit aus derartigen Klassenbeschreibungen zu generieren.

Des weiteren ist es bekannt, ein Mapping zwischen einem Dataset und Tabellen einer Datenbank vorzuhalten, um eine Interaktion zu ermöglichen bzw. zu vereinfachen. Dies ist beispielsweise im Rahmen der Objektrelationalen Abbildungen (ORM) bekannt. Dazu wird üblicherweise eine Data Binding Engine verwendet, die die Bindung zur Laufzeit umsetzt.

Auch ist es bekannt, grafische Benutzerschnittstellen, wie Fenster, Masken und/oder Dialoge in strukturierten Dateien zu beschreiben, beispielsweise in XAML, wie dies beispielsweise in der Windows Presentation Foundation (kurz WPF) üblich ist. Dies ermöglicht eine einfache Änderung und Speicherung. Vor der Ausführung wird die strukturierte Beschreibung kompiliert. Dabei ist es auch möglich, ein Binding an Variablen oder Datenquellen vorzunehmen. So kann beispielsweise ein Label an eine Variable (hier MyLabel) gebunden werden:

```
<Label Width = "200" Height = "50" Content = "{Binding MyLabel}"/>
```

So ist es möglich, einzelne gebundene Inhalte (Daten) zur Laufzeit anzupassen und diese Änderung (der Daten) in der Anzeige wiederzugeben. Der Text des Labels kann so beispielsweise zur Laufzeit den Inhalt einer Variablen an die es gebunden ist (z. B. MyLabel) widerspiegeln und somit geändert werden.

Aufgabe der vorliegenden Erfindung ist es, eine Applikation auch zur Laufzeit über das bekannte Maß hinaus anpassen zu können, beispielsweise die Anordnung von Elementen des Fensters, wie Label, zu verändern, solche hinzuzufügen und/oder zu entfernen, ohne dass ein Neukompilieren notwendig wird. Insbesondere soll auch die grafische Benutzerschnittstelle zur Laufzeit anpassbar und/oder erweiterbar sein.

Erfindungsgemäß wird mindestens eine Benutzerschnittstelle nicht beim Start des Programms oder früher sondern erst später, insbesondere beim Aufruf der Benutzerschnittstelle, kompiliert und auf die Datenstruktur gebunden. Dadurch ist eine sehr weitgehende Anpassung auf dieser Ebene zur Laufzeit möglich.

Dazu oder alternativ führt die Erfindung eine gegenüber der bekannten BindingEngine veränderte BindingEngine ein. Diese (BindingEngine) ermöglicht es, Verweise auf zu bindende Elemente mit einer erst zur Laufzeit kompilierten Datenstruktur ("dynamische Datenstruktur") zu verknüpfen. Dadurch wird eine nachträgliche Anpassung der Software zur Laufzeit (und ohne Zugriff auf deren Sourcecode) möglich, da der eigentlich kompilierte Programmcode nicht berührt wird. Dies ermöglicht es beispielsweise, Verweise auf zu bindende Elemente mit dynamischen Argumenten zu verarbeiten und die zu bindenden Elemente unter Verwendung der dynamischen Argumente einzufügen bzw. zu binden. Insbesondere wird vorteilhafterweise ein Mapping der Daten durch frei konfigurierbare SQL-Anweisungen, insbesondere mit dynamischen Argumenten unterstützt.

Dazu wird von der BindingEngine oder dem Verfahren zur Bindung eine zur Laufzeit veränderliche Bindungskonfiguration nach Verweisen auf zu bindende Elemente durchsucht und die zu bindenden Elementen, insbesondere mit dynamisch strukturierter Datenquelle, einfügt.

Vorteilhafterweise aber auch eigenständig erfindungsgemäß wird eine generische Methode zur Anzeige und/oder Bearbeitung verwendet, die zur Anzeige und/oder Bearbeitung der Daten auf eine und/oder die zur Laufzeit veränderliche Bindungskonfiguration zurückgreift und insbesondere aus dieser nicht nur die Datenquelle, sondern auch die gebundenen Datenfelder ausliest, an die die Daten der Datenquelle gebunden sind.

Gelöst wird die Aufgabe also auch durch ein Verfahren zur Anzeige und/oder Bearbeitung von Daten, das zur Anzeige und/oder Bearbeitung der Daten auf eine und/oder die zur Laufzeit veränderliche Bindungskonfiguration zurückgreift und insbesondere aus dieser nicht nur die Datenquelle, sondern auch die gebundenen Datenfelder ausliest, an die die Daten der Datenquelle gebunden sind. Eine Bindungskonfiguration ist dabei nicht notwendigerweise in einer einzigen Datei abgelegt. Sie kann auch auf mehrere Dateien verteilt oder in anderen Strukturen vorgehalten werden.

Eine solche BindingEngine, ein solches Verfahren und/oder eine solche Methode lesen also die Datenfelder, in denen Daten angezeigt werden sollen und die Datenquelle, aus der die Daten entnommen werden sollen, aus einer und/oder der die zur Laufzeit veränderliche Bindungskonfiguration.

Dazu oder alternativ nutzt die Erfindung das Konzept der differenziellen Ableitung. Diese legt Änderungen optional in Änderungsdateien ab, die die Anpassungsinformationen enthalten. Dadurch wird der ursprüngliche Programmcode und die ursprüngliche Konfiguration nicht verändert, sondern es wird zur Laufzeit ein Zusammenführen der ursprünglichen Konfiguration und der Änderungsdateien vorgenommen. Dies ermöglicht beispielsweise in weitem Umfang (zentrale) Updates des ursprünglichen Programmcodes ohne Verlust individueller Änderungen.

Insbesondere werden Änderungen an strukturierten Dateien, XML Dateien, XAML Dateien, Programmcode und/oder Datenbindungen, insbesondere dsd Dateien, in Änderungsdateien abgelegt und zur Laufzeit mit der ursprünglichen Konfiguration zusammengeführt.

Dies kann insbesondere bei XML und XAML Dateien einfach realisiert werden, da es sich um strukturierte Daten handelt. Aber auch in Bezug auf Datenbindung, insbesondere in dsd-Dateien, lässt sich dies realisieren, beispielsweise auch in der Form von strukturierten Dateien. So lassen sich beispielsweise sql Anweisungen in einer Datenbindung ebenfalls strukturiert speichern, beispielsweise wie folgt:

```
<?xml version = "1.0" encoding = "utf-8"?>
    <DSQL>
     <Tables>
       <Table TbIName = "bel">
        <XSQL Comment = "" IsDesignMode = "True" >
         <Arguments />
         <Tables>
           <Table Name="bel" X = "60" Y = "20" Width = "180"
   Height = "240" SortFieldsAlphabetically = "false" HideUnused-
   Fields = "false" />
         </Tables>
         < Fields >
           <Field TableName = "bel" Name = "typ" Caption = "Typ" />
           <Field TableName = "bel" Name = "nr" Caption = "Nummer" />
           <Field TableName = "bel" Name = "datum" Caption = "Datum" />
           <Field TableName = "bel" Name = "pers_typ" Caption = "Personen-
   Typ" />
           <Field TableName = "bel" Name="pers_nr" Caption = "Personen-
   Nummer" />
           <Field TableName = "bel" Name = "status" Caption = "Status" />
           <Field TableName = "bel" Name = "druckstatus" Cap-
   tion = "Druckstatus" />
         </Fields>
         <ComputedFields />
         < Expressions />
         <Joins />
         <WhereClause />
         <GroupByClause />
         <OrderByClause />
         <Statement>SELECT "bel"."typ",
   "bel"."nr",
   "bel"."datum",
   "bel"."pers_typ",
   "bel"."pers_nr",
   "bel"."status",
   "bel"."druckstatus"
   FROM "bel"
    </Statement >
        </XSOL>
       </Table>
     </Tables>
    </DSQL>
```

In Bezug auf Programmcode lässt sich das Ablegen von Änderungen in Änderungsdateien, die die Anpassungsinformationen enthalten und zur Laufzeit mit der ursprünglichen Konfiguration und/oder einem ursprünglichen Programmcode zusammengeführt werden, beispielsweise durch objektorientierte Ableitungen von Funktionen der ursprünglichen Konfiguration und/oder eines ursprünglichen Programmcodes realisieren. Zur Nutzung der objektorientierten Ableitungen zum Ablegen von Änderungen in Änderungsdateien, werden die Funktionen des ursprünglichen Programmcodes und/oder der ursprünglichen Konfiguration insbesondere als virtuelle Funktionen programmiert und/oder spät gebunden (late binding).

Der Bezug einer Änderungsdatei zur ursprünglichen Konfiguration kann, beispielsweise in der Änderungsdatei, beispielsweise unter Verwendung einer eindeutigen ID, beispielsweise einer Datei, die die ursprüngliche Konfiguration beinhaltet, gespeichert werden - zumeist über einen generierten Hash-Wert - hergestellt werden. Beispielsweise dadurch kann erkannt werden, wenn sich die ursprüngliche Konfiguration, beispielsweise durch ein Update, geändert hat oder zur welcher Version der ursprünglichen Konfiguration die Änderungsdatei ursprünglich gehört.

Erfindungsgemäß wird beispielsweise ein Verfahren zur Generierung und/oder Ausführung einer Computersoftware aufweisend mindestens eine grafische Benutzerschnittstelle, so umgesetzt, dass die grafische Benutzerschnittstelle zur Laufzeit dynamisch basierend auf einer zur Laufzeit veränderlichen Konfiguration der grafischen Benutzerschnittstelle dargestellt wird.

Dies kann beispielsweise derart erfolgen, dass die Konfiguration der grafischen Benutzerschnittstelle die Oberflächengestaltung der grafischen Benutzerschnittstelle und/oder die Konfiguration mindestens eine nicht kompilierte Datei, eine Textdatei und/oder eine XAML Datei beinhaltet.

Eine XAML Datei, die unkompiliert vorgehalten und auf die im Folgenden als windPers.xaml Bezug genommen wird, kann beispielsweise wie folgt aussehen:

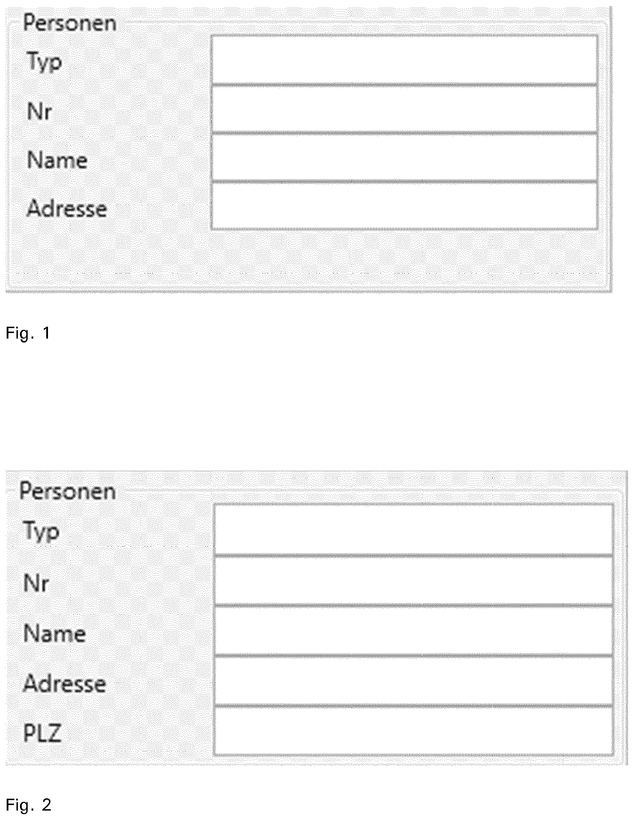

```
 <Grid xmlns = "http://schemas.microsoft.com/winfx/2006/xaml/presentation"
 xmlns:x = "http://schemas.microsoft.com/winfx/2006/xaml">
 <GroupBox Header = "Personen" DataContext = "{Binding Path = pers}">
   < Grid >
      < Grid.RowDefinitions >
         <RowDefinition Height = "25" />
         <RowDefinition Height = "25" />
         <RowDefinition Height = "25" />
         <RowDefinition Height = "25" />
         <RowDefinition Height = "25" />
      </Grid.RowDefinitions>
      < Grid.ColumnDefinitions >
         <ColumnDefinition Width = "100" />
         <ColumnDefinition Width = "200" />
      </Grid.ColumnDefinitions>
      <Label Grid.Row = "0" Grid.Column = "0" Content="Typ" />
      <TextBox Grid.Row = "0" Grid.Column = "1" Text="{Binding
      Path=typ}" />
      <Label Grid.Row = "1" Grid.Column = "0" Content="Nr" />
      <TextBox Grid.Row = "1" Grid.Column="1" Text="{Binding Path=nr}"
      />
      <Label Grid.Row = "2" Grid.Column = "0" Content="Name" />
      <TextBox Grid.Row = "2" Grid.Column="1" Text="{Binding
      Path =name}" />
      <Label Grid.Row = "3" Grid.Column = "0" Content = "Adresse" />
      <TextBox Grid.Row = "3" Grid.Column = "1" Text = "{Binding
      Path = adresse}" />
   </Grid>
 </GroupBox>
 </Grid>
 und das Fenster der Fig. 1 codieren.
```

Durch eine einfache Änderung kann das Fenster zur Laufzeit erweitert werden:

```
 <Grid xmlns = "http://schemas.microsoft.com/winfx/2006/xaml/presentation"
 xmlns:x = "http://schemas.microsoft.com/winfx/2006/xaml">
 <GroupBox Header = "Personen" DataContext = "{Binding Path = pers}">
   < Grid >
      < Grid.RowDefinitions >
         <RowDefinition Height = "25" />
         <RowDefinition Height = "25" />
         <RowDefinition Height = "25" />
         <RowDefinition Height = "25" />
         <RowDefinition Height = "25" />
      </Grid.RowDefinitions >
      < Grid.ColumnDefinitions >
         <ColumnDefinition Width = "100" />
         <ColumnDefinition Width = "200" />
      </Grid.ColumnDefinitions>
      <Label Grid.Row = "0" Grid.Column = "0" Content = "Typ" />
      <TextBox Grid.Row = "0" Grid.Column = "1" Text = "{Binding
      Path=typ}" />
      <Label Grid.Row = "1" Grid.Column = "0" Content = "Nr" />
      <TextBox Grid.Row = "1" Grid.Column = "1" Text = "{Binding Path=nr}"
      />
      <Label Grid.Row = "2" Grid.Column = "0" Content = "Name" />
      <TextBox Grid.Row = "2" Grid.Column="1" " Text = "{Binding
      Path = name}" />
      <Label Grid.Row = "3" Grid.Column = "0" Content = "Adresse" />
      0<TextBox Grid.Row = "3" Grid.Column = "1" " Text = "{Binding
      Path=adresse}" />
      <Label Grid.Row = "4" Grid.Column = "0" Content = "PLZ" />
      <TextBox Grid.Row = "4" Grid.Column = "1" Text = "{Binding
      Path = plz}" />
   </Grid>
 </GroupBox>
 </Grid>
```

und das Fenster der Figur 2 codieren.

Durch den Einsatz der "Customizing Runtime" (im folgenden "CR" genannt), der eine "Loader"-Funktion zugrunde liegt, die von der Konfiguration und/oder ihrem Inhalt unabhängig ist, muss der kompilierte Code der CR nicht verändert werden. Insbesondere wird also eine generische Anbindung der Konfiguration, also eine solche, die von der Konfiguration und/oder ihrem Inhalt unabhängig ist, insbesondere werden also lediglich die CR und die funktionale Logik kompiliert vorgehalten. Eine generische Anbindung kann beispielsweise dadurch realisiert werden, dass ein generisches Element, beispielsweise generischer Container und/oder ein generisches Fenster eingebunden und kompiliert wird, das/der das Nachladen der veränderlichen Konfiguration auslöst und/oder in dem ein basierend auf der nachgeladenen Konfiguration erzeugtes Objekt angezeigt wird. Das Nachladen erfolgt insbesondere durch einen generischen kompilierten Code (auch CR genannt). Das Anzeigen erfolgt beispielsweise durch ein generisches, insbesondere leeres, Fenster. Dies kann beispielsweise durch eine generische und kompilierte xaml Datei als generisches Fenster erfolgen. Das Fenster kann das nachgeladene Objekt darstellen und/oder das Nachladen initiieren. Ein generisches Fenster kann sich in wpf wie folgt darstellen:

```
 <Window x:Class = "TimeLine.Patent.MainWindow"
   xmlns = "http://schemas.microsoft.com/winfx/2006/xaml/presentation"
   xmlns:x = "http://schemas.microsoft.com/winfx/2006/xaml"
   Title = "MainWindow" Height = "350" Width = "525">
 < Grid >
   < Grid.ColumnDefinitions >
      <ColumnDefinition Width = "Auto" />
      <ColumnDefinition Width = "*" />
   </Grid.ColumnDefinitions>
   <StackPanel Grid.Column = "0" x:Name = "menuStackPanel" />
   <ContentControl Grid.Column = "1" x:Name = "contentControl" />
 </Grid>
 </Window>
```

Durch ein entsprechendes Nachladen kann dann die zur Laufzeit veränderlichen Konfiguration der grafischen Benutzerschnittstelle nachgeladen werden. Dies kann beispielsweise wie folgt realisiert werden:
Zum einen wird eine entsprechende Verknüpfung und/oder Einstellung geschaffen, beispielsweise wie folgt über die modules.xml:

   ```
<modules>
 <module id = "wndPers" title = "Personen" xaml = "wndPers.xaml"
 dll = "TimeLine.Patent.exe" class = "TimeLine.Patent.Modules.wndPers" />
 <module id = "wndPers2" title = "Personen" xaml = "wndPers2.xaml"
 dll = "TimeLine.Patent.exe" class = "TimeLine.Patent.Modules.wndPers2" />
 </modules>
```

Ein Nachladen der entsprechenden Konfiguration, eines Fensters und/oder eines Moduls kann beispielsweise durch einen Klick auf einen entsprechenden Button veranlasst werden, der beim Starten des Programms im generischen Fenster erzeugt und mit einer entsprechenden Routine verknüpft wird.

In einer Hauptroutine werden insbesondere die vorgehaltenen, unterschiedlichen Module und/oder Fenster initialisiert, beispielsweise wie folgt:

```
 public MainWindow()
   {
      InitializeComponent();
      foreach (var module in ModuleLoader.GetModules())
      {
        var button = new Button
                  {
                     Content = module.Title
                  };
         button.Click + = (sender, args) = >
                    {
                       contentControl.Content = ModuleLoad-
                       er.OpenModule(module);
                    };
         menuStackPanel.Children.Add(button);
      }
   }
```

Das Nachladen selbst kann dabei unabhängig von dessen Auslösen durch geeignete, insbesondere kompilierte und insbesondere generische Methoden erfolgen, beispielsweise wie folgt, wobei die oben exemplarisch genannte Hauptroutine bereits Bezug auf diesen Code nahm:

```
 public class Module
 {
   public string Id { get; set; }
   public string Title { get; set; }
   public string Xaml { get; set; }
   public string Dll { get; set; }
   public string Class { get; set; }
   }
   public static IEnumerable<Module> GetModules()
   {
      var document = XDocument.Load(@"Config\modules.xml");
      foreach (var moduleElement in document.Root.Elements())
      {
        yield return new Module
                  {
                     Id = moduleElement.Attribute("id").Value,
                     Title = moduleElement.Attribute("title").Value,
                     Xaml = moduleElement.Attribute("xaml").Value,
                     Dll = moduleElement.Attribute("dll").Value,
                     Class = moduleElement.Attribute("class").Value,
                  };
      }
   }
   public static FrameworkElement OpenModule(Module module)
   {
      var xamlPath = Path.Combine("Modules", module.Xaml);
      var assembly = Assembly.LoadFile(Path.GetFullPath(module.Dll));
      var who = assembly.Createlnstance(module.Class) as WindowHandlin-
      gObject;
      var content = XamlReader.Load(File.OpenRead(xamlPath)) as Frame-
      workElement;
      who.WindowContent = content;
      who.Opened();
      return content;
   }
   }
```

Durch eine solche Konfiguration und/oder Implementierung kann die Erfindung beispielsweise umgesetzt werden.

Die veränderte BindingEngine, die es ermöglicht, Verweise auf zu bindende Elemente mit einer erst zur Laufzeit kompilierten Datenstruktur ("dynamische Datenstruktur") zu verknüpfen, kann beispielsweise wir folgt realisiert werden:
Ein Dataset, in diesem Fall zur Bindung der oben beschriebenen Fenster, die darauf bereits Bezug nahmen) an eine Datenbanktabelle kann wie folgt als pers.dsd realisiert werden:

   ```
 <DataSetDefinition >
    <Tables>
          <Table Name = "pers" >
      SELECT
      typ,
      nr,
      name,
      adresse
     FROM pers</Table>
    </Tables>
    < /DataSetDefinition >
```

Diese Definition kann zur Laufzeit beispielsweise passend zum obigen Beispiel erweitert werden:

```
 < DataSetDefinition >
    <Tables>
          <Table Name = "pers" >
      SELECT
      typ,
      nr, s
      name,
      adresse
      ,plz
      FROM pers</Table>
    </Tables>
    < /DataSetDefinition >
```

Die Anbindung kann dabei über generische Funktion, beispielsweise wie folgt, erfolgen:

```
 public class xDataSet : DataSet
 {
   private readonly Dictionary<string, string> sqlDictionary = new Diction-
   ary<string, string>();
   public xDataSet(string dataSetld)
   {
      var document = XDocument.Load(Path.Combine("DataSets", dataSetld
      + ".dsd"));
      var tableElements = document.Root.Element("Tables").Elements();
      foreach (var tableElement in tableElements)
      {
        var tableName = tableElement.Attribute("Name").Value;
        var sql = tableElement.Value;
        sqlDictionary[tableName] = sql;
      }
   }
   public void Retrieve()
   {
      foreach (var table in this.Tables.Cast<DataTable>().ToArray())
      {
        this.Tables.Remove(table);
      }
      using (var connection = new SQLiteConnection("Data
      Source = test.db;"))
      {
        connection.Open();
        foreach (var sqlPair in sqlDictionary)
         {
           var tableName = sqlPair.Key;
           var sql = sqlPair.Value;
           var adapter = new SQLiteDataAdapter(sql, connection);
           adapter.Fill(this, tableName);
         }
      }
   }
   }
   public class wndPers : WindowHandlingObject
   {
   public override void Opened()
   {
      base.Opened();
      var dataSet = new xDataSet("pers");
      dataSet.Retrieve();
      WindowContent.DataContext = dataSet;
   }
   }
```

Dadurch kann die Datenanbindung ebenfalls flexibel gehalten werden und es gelingt der Spagat, dass einerseits dynamisch Elemente auf dynamisch veränderliche Datenstrukturen gebunden werden Anpassbarkeit zur Laufzeit) aber trotzdem im Sourcecode mit (durch Codegenerator) generierten typisierten (kompilierten ("type-safe")) Datenstrukturen gearbeitet werden kann.

Durch eine Kombination der zur Laufzeit änderbaren Fenster und der zur Laufzeit flexiblen Datenanbindung kann eine besondere Flexibilität zur Laufzeit geschaffen werden, da sowohl Datenbindung als auch Darstellung und/oder Benutzerschnittstellen zur Laufzeit weitgehend frei veränderbar sind.

Die Aufgabe wird auch gelöst durch eine Computersoftware zur Generierung, Ausführung und/oder Darstellung mindestens einer grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

Die Aufgabe wird ebenfalls gelöst durch einen Datenträger aufweisend eine erfindungsgemäße Computersoftware, BindingEngine und/oder ein eine Computersoftware eingerichtet zur Durchführung eines erfindungsgemäßen Verfahrens.

Die Aufgabe wird ebenfalls gelöst durch Datenverarbeitungsvorrichtung, aufweisend eine erfindungsgemäße Computersoftware, eine BindingEngine und/oder eine Computersoftware eingerichtet zur Durchführung eines erfindungsgemäßen Verfahrens und/oder eine Datenverarbeitungsvorrichtung eingerichtet zur Durchführung eines erfindungsgemäßen Verfahrens.

In Bezug auf die Computersoftware und BindingEngine können alle für das Verfahren geschilderten vorteilhaften Ausführungen entsprechend als vorteilhafte Weiterbildungen umgesetzt werden.

## Patentansprüche

1. Verfahren zur Generierung und/oder Ausführung einer Computersoftware aufweisend mindestens eine grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

2. Verfahren nach Anspruch 1, wobei die Konfiguration der grafischen Benutzerschnittstelle die Oberflächengestaltung der grafischen Benutzerschnittstelle beinhaltet.

3. Verfahren nach einem der vorstehenden Ansprüche, wobei die Konfiguration mindestens eine nicht kompilierte Datei, eine Textdatei und/oder eine XAML Datei beinhaltet.

4. Verfahren nach einem der vorstehenden Ansprüche, wobei ein generisches und kompiliertes Fenster verwendet wird, um darin die grafische Benutzerschnittstelle zur Laufzeit dynamisch basierend auf der zur Laufzeit veränderlichen Konfiguration der grafischen Benutzerschnittstelle darzustellen.

5. Verfahren nach einem der vorstehenden Ansprüche, wobei die Benutzerschnittstelle eingerichtet ist zur Anzeige, Eingabe und/oder Veränderung von Daten und mindestens eine Bindung mit einem Datensatz aufweist.

6. Verfahren nach einem der vorstehenden Ansprüche, wobei eine BindingEngine eine zur Laufzeit veränderliche Bindungskonfiguration nach Verweisen auf zu bindende Elementen durchsucht und die zu bindenden Elementen, insbesondere mit dynamisch strukturierter Datenquelle, einfügt.

7. Verfahren nach einem der vorstehenden Ansprüche, wobei die BindingEngine eingerichtet ist Verweise auf zu bindende Elemente mit dynamischen Argumenten zu verarbeiten und die zu bindenden Elemente unter Verwendung der dynamischen Argumente einfügt.

8. Computersoftware zur Generierung, Ausführung und/oder Darstellung mindestens einer grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

9. BindingEngine eine zur Laufzeit veränderliche Bindungskonfiguration nach Verweisen auf zu bindende Elementen durchsucht und die zu bindenden Elemente, insbesondere mit dynamisch strukturierter Datenquelle, einfügt.

10. Verfahren zur Bindung von Daten, wobei eine zur Laufzeit veränderliche Bindungskonfiguration nach Verweisen auf zu bindende Elemente sucht und die zu bindenden Elemente, insbesondere mit dynamisch strukturierter Datenquelle, eingefügt werden.

11. Computersoftware zur Bindung von Daten, wobei die Computersoftware eingerichtet ist, eine zur Laufzeit veränderliche Bindungskonfiguration nach Verweisen auf zu bindende Elemente zu durchsuchen und die zu bindenden Elemente, insbesondere mit dynamisch strukturierter Datenquelle, eingefügt werden.

## Geänderte Patentansprüche

### Geänderte Patentansprüche gemäss Regel 137(2) EPÜ.

**1.** Verfahren zur Generierung und/oder Ausführung einer Computersoftware aufweisend mindestens eine grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

**2.** Verfahren nach Anspruch 1, wobei die Konfiguration der grafischen Benutzerschnittstelle die Oberflächengestaltung der grafischen Benutzerschnittstelle beinhaltet.

**3.** Verfahren nach einem der vorstehenden Ansprüche, wobei die Konfiguration mindestens eine nicht kompilierte Datei, eine Textdatei und/oder eine XAML Datei beinhaltet.

**4.** Verfahren nach einem der vorstehenden Ansprüche, wobei ein generisches und kompiliertes Fenster verwendet wird, um darin die grafische Benutzerschnittstelle zur Laufzeit dynamisch basierend auf der zur Laufzeit veränderlichen Konfiguration der grafischen Benutzerschnittstelle darzustellen.

**5.** Verfahren nach einem der vorstehenden Ansprüche, wobei die Benutzerschnittstelle eingerichtet ist zur Anzeige, Eingabe und/oder Veränderung von Daten und mindestens eine Bindung mit einem Datensatz aufweist.

**6.** Verfahren nach einem der vorstehenden Ansprüche, wobei eine BindingEngine eine zur Laufzeit veränderliche Bindungskonfiguration nach Verweisen auf zu bindende Elementen durchsucht und die zu bindenden Elementen, insbesondere mit dynamisch strukturierter Datenquelle, einfügt.

**7.** Verfahren nach Anspruch 6, wobei die BindingEngine eingerichtet ist Verweise auf zu bindende Elemente mit dynamischen Argumenten zu verarbeiten und die zu bindenden Elemente unter Verwendung der dynamischen Argumente einfügt.

**8.** Computersoftware zur Generierung, Ausführung und/oder Darstellung mindestens einer grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

**9.** BindingEngine, die eine zur Laufzeit veränderliche Bindungskonfiguration nach Verweisen auf zu bindende Elementen durchsucht und die zu bindenden Elemente, insbesondere mit dynamisch strukturierter Datenquelle, einfügt.

**10.** Verfahren zur Bindung von Daten, wobei eine zur Laufzeit veränderliche Bindungskonfiguration nach Verweisen auf zu bindende Elemente durchsucht wird und die zu bindenden Elemente, insbesondere mit dynamisch strukturierter Datenquelle, eingefügt werden.

**11.** Computersoftware zur Bindung von Daten, wobei die Computersoftware eingerichtet ist, eine zur Laufzeit veränderliche Bindungskonfiguration nach Verweisen auf zu bindende Elemente zu durchsuchen und die zu bindenden Elemente, insbesondere mit dynamisch strukturierter Datenquelle, eingefügt werden.

**1.** Verfahren zur Generierung und/oder Ausführung einer Computersoftware aufweisend mindestens eine grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird, wobei ein generisches und kompiliertes Fenster verwendet wird, um darin die grafische Benutzerschnittstelle zur Laufzeit dynamisch basierend auf der zur Laufzeit veränderlichen Konfiguration der grafischen Benutzerschnittstelle darzustellen.

**2.** Verfahren nach Anspruch 1, wobei die Konfiguration der grafischen Benutzerschnittstelle die Oberflächengestaltung der grafischen Benutzerschnittstelle beinhaltet.

**3.** Verfahren nach einem der vorstehenden Ansprüche, wobei die Konfiguration mindestens eine nicht kompilierte Datei, eine Textdatei und/oder eine XAML Datei beinhaltet.

**4.** Verfahren nach einem der vorstehenden Ansprüche, wobei die Benutzerschnittstelle eingerichtet ist zur Anzeige, Eingabe und/oder Veränderung von Daten und mindestens eine Bindung mit einem Datensatz aufweist.

**5.** Verfahren nach einem der vorstehenden Ansprüche, wobei eine BindingEngine eine zur Laufzeit veränderliche Bindungskonfiguration nach Verweisen auf zu bindende Elementen durchsucht und die zu bindenden Elementen, insbesondere mit dynamisch strukturierter Datenquelle, einfügt.

**6.** Verfahren nach Anspruch 5, wobei die BindingEngine eingerichtet ist Verweise auf zu bindende Elemente mit dynamischen Argumenten zu verarbeiten und die zu bindenden Elemente unter Verwendung der dynamischen Argumente einfügt.

**7.** Computersoftware zur Generierung, Ausführung und/oder Darstellung mindestens einer grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

**8.** BindingEngine, die eine zur Laufzeit veränderliche Bindungskonfiguration nach Verweisen auf zu bindende Elementen durchsucht und die zu bindenden Elemente, insbesondere mit dynamisch strukturierter Datenquelle, einfügt.

**9.** Verfahren zur Bindung von Daten, wobei eine zur Laufzeit veränderliche Bindungskonfiguration nach Verweisen auf zu bindende Elemente durchsucht wird und die zu bindenden Elemente, insbesondere mit dynamisch strukturierter Datenquelle, eingefügt werden.

**10.** Computersoftware zur Bindung von Daten, wobei die Computersoftware eingerichtet ist, eine zur Laufzeit veränderliche Bindungskonfiguration nach Verweisen auf zu bindende Elemente zu durchsuchen und die zu bindenden Elemente, insbesondere mit dynamisch strukturierter Datenquelle, eingefügt werden.

**1.** Verfahren zur Generierung und/oder Ausführung einer Computersoftware aufweisend mindestens eine grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird, wobei die Konfiguration der grafischen Benutzerschnittstelle die Oberflächengestaltung der grafischen Benutzerschnittstelle beinhaltet und die Konfiguration mindestens eine nicht kompilierte Datei, eine Textdatei und/oder eine XAML Datei beinhaltet.

**2.** Verfahren nach einem der vorstehenden Ansprüche, wobei ein generisches und kompiliertes Fenster verwendet wird, um darin die grafische Benutzerschnittstelle zur Laufzeit dynamisch basierend auf der zur Laufzeit veränderlichen Konfiguration der grafischen Benutzerschnittstelle darzustellen.

**3.** Verfahren nach einem der vorstehenden Ansprüche, wobei die Benutzerschnittstelle eingerichtet ist zur Anzeige, Eingabe und/oder Veränderung von Daten und mindestens eine Bindung mit einem Datensatz aufweist.

**4.** Verfahren nach einem der vorstehenden Ansprüche, wobei eine BindingEngine eine zur Laufzeit veränderliche Bindungskonfiguration nach Verweisen auf zu bindende Elementen durchsucht und die zu bindenden Elementen, insbesondere mit dynamisch strukturierter Datenquelle, einfügt.

**5.** Verfahren nach Anspruch 4, wobei die BindingEngine eingerichtet ist Verweise auf zu bindende Elemente mit dynamischen Argumenten zu verarbeiten und die zu bindenden Elemente unter Verwendung der dynamischen Argumente einfügt.

**6.** Computersoftware zur Generierung, Ausführung und/oder Darstellung mindestens einer grafische Benutzerschnittstelle, wobei die grafische Benutzerschnittstelle zur Laufzeit dynamisch basierend auf einer zur Laufzeit veränderlichen Konfiguration der grafischen Benutzerschnittstelle dargestellt wird.

**7.** BindingEngine, die eine zur Laufzeit veränderliche Bindungskonfiguration nach Verweisen auf zu bindende Elementen durchsucht und die zu bindenden Elemente, insbesondere mit dynamisch strukturierter Datenquelle, einfügt.

**8.** Verfahren zur Bindung von Daten, wobei eine zur Laufzeit veränderliche Bindungskonfiguration nach Verweisen auf zu bindende Elemente durchsucht wird und die zu bindenden Elemente, insbesondere mit dynamisch strukturierter Datenquelle, eingefügt werden.

**9.** Computersoftware zur Bindung von Daten, wobei die Computersoftware eingerichtet ist, eine zur Laufzeit veränderliche Bindungskonfiguration nach Verweisen auf zu bindende Elemente zu durchsuchen und die zu bindenden Elemente, insbesondere mit dynamisch strukturierter Datenquelle, eingefügt werden.
